# EUROPÄISCHE PATENTSCHRIFT

(11) **EP 0 355 283 B1**
(45) Veröffentlichungstag und Bekanntmachung des Hinweises auf die Patenterteilung: **19.05.1993**
(21) Anmeldenummer: 89110134.7
(22) Anmeldetag: 05.06.1989
(51) Int. Cl.: A01F 25/20

(54) **Schneidleiste**
Cutter bar
Lame de coupe

(30) Priorität: 09.07.1988 DE 8808867 U
(43) Veröffentlichungstag der Anmeldung: 28.02.1990
(73) Patentinhaber: von der Heide, Hans, D-49479 Ibbenbüren (DE)
(72) Erfinder: von der Heide, Hans, D-49479 Ibbenbüren (DE)
(74) Vertreter: Schulze Horn, Stefan, Dipl.-Ing. M.Sc.

(56) Entgegenhaltungen:
- EP-A- 0 255 024
- EP-A- 0 337 089
- DE-U- 8 812 574
- FR-A- 2 087 999

## Beschreibung

Die Erfindung betrifft ein Schneidwerkzeug für ein Silagegutschneidegerät nach dem Oberbegriff des Patentanspruchs.

Ein Schneidwerkzeug der genannten Art ist aus der unter Artikel 54 (3) EPÜ fallenden EP-A-0 337 089 des Anmelders bekannt. Bei diesem Schneidwerkzeug sind zwei unterschiedlich hohe Schneidleisten in jedem Schneidleistenpaar vorgesehen, wobei jeweils die inneren Schneidleisten höher sind als die äußeren. Die Endarme der Schneidleisten sind zur Mitte hin abgewinkelt und liegen übereinander. Dies macht nachteilig die Fertigung und Vorhaltung mindestens zweier unterschiedlicher Schneidleistenausführungen für ein Schneidwerkzeug erforderlich.

Aus der EP-A-0 255 024 ist ein Silagegutschneider bekannt, der einen U-förmigen Tragrahmen mit einem mittleren und zwei seitlichen Schenkeln aufweist. Die Schenkel sind etwa plattenförmig und weitgehend als flache Gehäuse mit Verkleidungen ausgebildet, aus denen unterseitig Messerleisten vorragen, die in horizontaler Richtung oszilierend hin- und herbewegbar an den Schenkein geführt sind. An jedem Schenkel sind zwei zueinander parallel ausgerichtete Messerleisten angeordnet, die zueinander gegenläufig bewegbar sind. Für jede Messerleiste ist an dem ihr zugeordneten Schenkel ein mehrarmiger Antriebshebel angeordnet, der einerseits von einem Antriebszylinder aus in Bewegung versetzbar ist und der andererseits mit der zugeordneten Messerleiste gelenkig verbunden ist. Dabei sind diese Gelenke jeweils an der Oberseite der Messerleisten angeordnet und ragen über diese nach oben hin vor, was die Bauhöhe insgesamt relativ hoch macht. Die Messerleistenenden werden für die Kraftübertragung nicht genutzt.

Aufgabe der Erfindung ist es, ein Schneidwerkzeug der eingangs genannten Art zu schaffen, dessen Schneidleisten untereinander eine gleiche Bauart bei einfacher Konstruktion aufweisen.

Diese Aufgabe wird erfindungsgemäß gelöst durch ein Schneidwerkzeug der eingangs genannten Art mit den kennzeichnenden Merkmalen des Patentanspruchs.

Mit der Erfindung wird erreicht, daß Schneidleisten von gleicher Bauart verwendet werden können und daß nur noch die Antriebsarme unterschiedlich ausgebildet sind, wobei letztere vergleichsweise einfache Bauteile sind, die ohne großen Aufwand in zwei Ausführungen herstellbar sind. Die Schneidleisten, die im Einsatz einem stetigen Verschleiß unterworfen sind und deshalb regelmäßig ersetzt werden müssen, brauchen nun nicht mehr in unterschiedlichen Ausführungen für ein Schneidwerkzeug vorgehalten zu werden, was eine Vereinfachung bei der Herstellung und Lagerhaltung sowie hei der Reparatur des Schneidwerkzeuges darstellt.

Ein Ausführungsbeispiel der Erfindung ist in der Zeichnung dargestellt und wird im folgenden näher beschrieben. Es zeigen:
- Figur 1: einen Querschnitt durch ein Schneidwerkzeug mit zwei einander spiegelbildlich gegenüberstehenden Schneidleisten, entlang der Achse A - A in Figur 2;
- Figur 2: eine perspektivische Darstellung eines Endes einer der Schneidleisten.

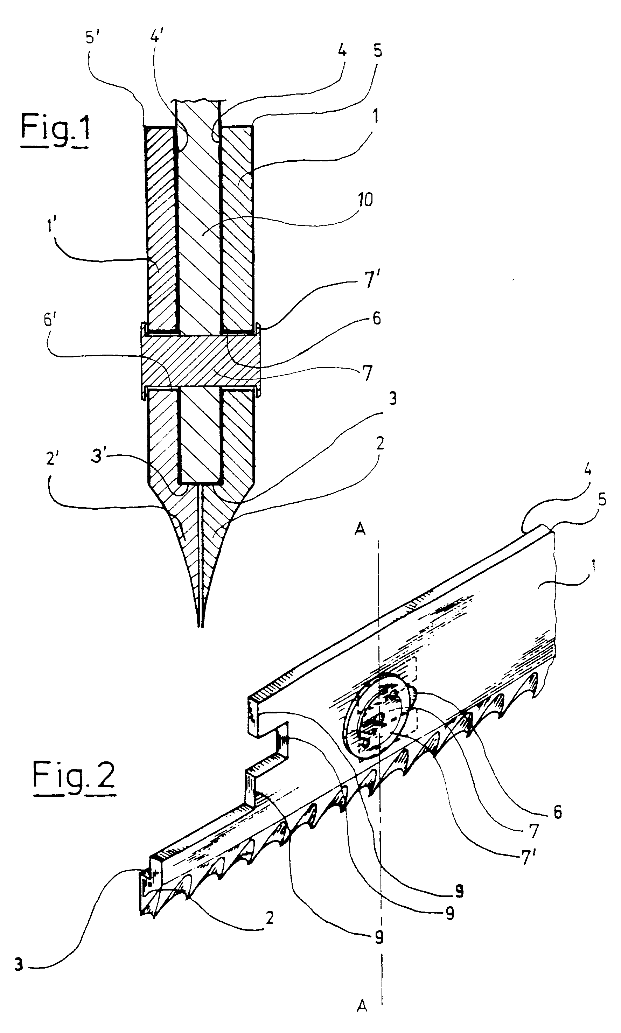

Die Schneidleisten 1 und 1', die sich in Figur 1 spiegelbildlich im Querschnitt gegenüberstehen, weisen jeweils an ihrer aufeinander zu weisenden inneren Schneidleistenflachseite 4 oberhalb ihrer Schneiden 2, 2' einen nach oben weisenden Absatz 3, 3' auf. Diese Absätze 3, 3' dienen dem Eingreifen der Unterkante des Tragrahmenmittelsteges 10 und gewährleisten eine gleichmäßige Verteilung des bei dem Schneidevorgang in der Silage vom Tragrahmen auf sie ausgeübten Druckes. Die langlochförmigen Aussparungen 6, 6' dienen der Aufnahme von Verbindungsbolzen 7 zur Führung und Halterung der Schneidleisten 1, 1' am Tragrahmenmittelsteg 10.

Das in Figur 2 dargestellte Ende einer der Schneidleisten 1 weist an seiner einen Seite eine Aussparung in Form einer rechteckigen Ausnehmung 9 auf. Diese dient der Aufnahme von Kraftübertragungsarmen, die, je nachdem, ob die Schneidleiste 1, 1' als innere oder äußere Schneidleiste innerhalb des Schneidwerkzeuges Verwendung findet, einander ergänzende Aussparungen aufweisen, so daß ein Eingreifen der Kraftübertragungsarme in einander überlagerter Weise geschehen kann und dennoch eine gleiche Ausführung beider Schneidleisten 1, 1' gewährleistet ist.

Die dargestellte Ausführungsform eines überkragenden Kopfes 7' des Verbindungsbolzens 7 stellt eine Möglichkeit dar, die Schneidleisten 1, 1' gegenüber dem sie tragenden Mittelsteg 10 des Tragrahmens zu führen, wobei das seitliche Spiel der Schneidleisten durch die jeweiligen Enden der Langlöcher 6 begrenzt ist.

## Patentansprüche

1. Schneidwerkzeug für ein Silagegutschneidegerät,
- wobei das Schneidwerkzeug aus zwei sägeblattartig mit je einer nach unten weisenden Schneide (2, 2') ausgestalteten Schneidleisten (1, 1') besteht, die an einem Tragrahmenmittelsteg (10) gehaltert sind,
- wobei wenigstens eine Schneidleiste (1, 1') relativ zur anderen in Längsrichtung hin- und herbeweglich ist,
- wobei die beiden Schneidleisten (1, 1') an ihrer inneren, der jeweils anderen Schneidleiste (1', 1) zugewandten Flachseite (4, 4') oberhalb der Schneide (2, 2') jeweils einen in Längsrichtung verlaufenden Absatz (3, 3') mit einer nach oben weisenden Absatzfläche aufweisen,
- wobei die beiden Schneidleisten (1, 1') mit ihrem Absatz (3, 3') jeweils gleitverschieblich an der Unterkante des Tragrahmenmittelsteges (10) anliegen und gegenläufig zueinander relativ zum Tragrahmenmittelsteg (10) hin- und herbewegbar sind,
- wobei die beiden Schneidleisten (1, 1') in ihrem Querschnitt zumindest im Bereich ihrer Schneide (2, 2') und ihres Absatzes (3, 3') spiegelbildlich zueinander ausgebildet sind und
- wobei die Schneidleisten (1, 1') einander gegenüberliegende Führungen (6) in Form langlochartiger Aussparungen zur Aufnahme von gleichzeitig die Schneidleistenführung gegenüber dem Tragrahmen darstellenden Verbindungsbolzen (7) aufweisen,
**dadurch gekennzeichnet,**
daß die Schneidleisten (1, 1') an ihrem einen Ende mit je einem Arm zur Verbindung mit einem Antriebsorgan und jeweils an dem Ende, das dem mit dem Arm ausgestatteten Ende gegenüber liegt, mit je einer Aussparung in Form einer rechteckigen Ausnehmung (9) zur Aufnahme je eines Antriebsarmes ausgestattet sind.

## Claims

1. Cutting tool for a green crop chopper,
- wherein the cutting tool consists of two cutter bars (1, 1') designed saw blade like each comprising a cutting edge (2, 2') pointing downwards, the cutter bars supported at a supporting frame middle web (10),
- wherein at least one cutter bar (1, 1') is movable backwards and forwards in a longitudinal direction in relation to the other one,
- wherein the two cutter bars (1, 1') each comprise at the inner flat sides (4, 4') thereof facing the other cutter bar (1, 1') above the cutting edge (2, 2') a shoulder (3, 3') extending in longitudinal direction and comprising a shoulder area pointing upwards,
- wherein the two cutter bars (1, 1') with the shoulders (3, 3') thereof each displaceably in a sliding motion engage the under edge of the supporting frame middle web (10) and are movable backwards and forwards in counteraction towards each other in relation to the supporting frame middle web (10),
- wherein the two cutter bars (1, 1') are designed with the cross-sections thereof at least in the areas of the cutting edges (2, 2') and the shoulders (3, 3') thereof mirror-inverted towards each other, and
- wherein the cutter bars (1, 1') comprise opposing guides (6) in the shape of reliefs like elongated holes for receiving connecting pins (7) simultanously acting as a cutter bar guide in relation to the supporting frame,
**characterized** in
that the cutter bars (1, 1') each comprise at the one end thereof an arm for a connection with a driving member and at the end opposed to the end comprising the arm a relief in the shape of a rectangular recess (9) for receiving a driving arm.

## Revendications

1. Outil de coupe pour un appareil de coupe de matière à ensiler,
- dans lequel l'outil de coupe se compose de deux lames de coupe (1, 1') en forme de lames de scie, pourvues chacune d'un tranchant (2, 2') tourné vers le bas, qui sont maintenues sur une barre centrale (10) de cadre porteur,
- dans lequel au moins une lame de coupe (1, 1') est mobile par rapport à l'autre en va-et-vient en direction longitudinale,
- dans lequel les deux lames de coupe (1, 1') présentent chacune, sur son côté plat intérieur (4, 4') tourné vers l'autre lame de coupe (1, 1'), au-dessus du tranchant (2, 2'), un épaulement s'étendant longitudinalement (3, 3') pourvu d'une surface d'épaulement tournée vers le haut,
- dans lequel les deux lames de coupe (1, 1') sont disposées chacune à coulissement par son épaulement (3, 3') contre le bord inférieur de la barre centrale (10) de cadre porteur et sont déplaçables en va-et-vient en sens contraire l'un à l'autre par rapport à la barre centrale (10) de cadre porteur,
- dans lequel les deux lames de coupe (1, 1') sont réalisées en image en miroir l'un de l'autre en coupe transversale au moins dans la zone de leur tranchant (2, 2') et de leur épaulement (3, 3') et,
- dans lequel les lames de coupe (1, 1') présentent des guidages (6) superposés l'un à l'autre en forme d'évidements en trous allongés pour recevoir des boulons de liaison (7) qui constituent en même temps le guidage des lames de coupe vis-à-vis du cadre porteur,
**caractérisé en ce que,**
les lames de coupe (1, 1') sont pourvues chacune, à une première de ses extrémités, d'un bras de liaison à un organe d'entraînement et, chacune, à l'extrémité qui est située à l'opposé de l'extrémité pourvue du bras, d'un évidement en forme de découpe rectangulaire (9) pour recevoir chacune un bras d'entraînement.
